# FASCICULE DE BREVET EUROPEEN

(11) **EP 3 429 875 B1**
(45) Date de publication et mention de la délivrance du brevet: **11.03.2020**
(21) Numéro de dépôt: 16809830.9
(22) Date de dépôt: 14.12.2016
(51) Int. Cl.: B60J 1/17, B60J 5/04

(54) **DISPOSITIF VITRE AFFLEURANT POUR PORTE DE VEHICULE A PANNEAU MOBILE A MOYENS DE BLOCAGE EN X, PATIN, PORTE ET VEHICULE AUTOMOBILE CORRESPONDANTS**
FENSTER BEGLEITUNGS VORRICHTUNG FÜR FAHRZEUGTÜR MIT BLOCKAGE IN X RICHTUNG, GLEITSCHUH, UND KORRESPONDIERENDER TÜR UND FAHRZEUG
WINDOW GUIDANCE DEVICE FOR VEHICLE DOOR WITH BLOCKING IN X-DIRECTION, GUIDESHOE, CORRESPONDING DOOR AND VEHICLE

(30) Priorité: 15.03.2016 FR 1652205; 26.04.2016 FR 1653690
(43) Date de publication de la demande: 23.01.2019
(73) Titulaire: Advanced Comfort Systems France SAS - ACS France, 79302 Bressuire Cedex (FR)
(72) Inventeur: CHARGE, Philippe, 79300 Bressuire (FR)
(74) Mandataire: Vidon Brevets & Stratégie
(86) Numéro de dépôt international: PCT/EP2016/081067
(87) Numéro de publication internationale: WO 2017/157493

(56) Documents cités:
- DE-A1- 3 419 542
- DE-A1- 10 339 524
- DE-A1-102012 001 644
- FR-A1- 2 535 776
- FR-A1- 3 021 254
- JP-U- H0 170 979
- US-A1- 2013 061 526

## Description

### 1. Domaine de l'invention

Le domaine de l'invention est celui des véhicules automobiles. Plus précisément, l'invention concerne les portes de véhicule, et en particulier l'équipement de baies ménagées dans de telles portes.

Plus précisément encore, l'invention concerne les portes de véhicule équipées d'au moins un panneau vitré mobile sensiblement verticalement, notamment pour passer d'une position fermée à une position ouverte dans laquelle il pénètre intégralement ou partiellement dans un caisson inférieur de carrosserie (le panneau mobile pouvant, bien sûr, prendre généralement, une pluralité de positions intermédiaires).

Une telle porte de véhicule peut notamment être une porte latérale, mais l'invention peut également s'appliquer, par exemple, aux portes battantes et/ou coulissantes d'un véhicule, y compris les portes arrière, les hayons...

L'invention concerne en particulier un dispositif vitré, destiné à être assemblé à un caisson de carrosserie pour former une porte de véhicule, sur lequel la surface vitrée est affleurant, c'est-à-dire selon lequel aucun cadre n'apparaît vu de l'extérieur.

### 2. Art antérieur

Des exemples de tels dispositifs sont décrits notamment dans les documents de brevet EP 1 422 091, DE 10 2012 001 644, DE 103 39 524 et EP 1 612 072.

Selon cette approche, un cadre est prévu, du côté orienté vers l'intérieur du véhicule, portant un ou plusieurs (classiquement deux) rails, coopérant avec des patins solidaires du panneau vitré mobile, et fixés sur la face de celui-ci orientée vers l'intérieur du véhicule. Le cadre peut, le cas échéant, être tronqué et être limité à des montants portant les rails.

Cette technique est intéressante, car elle permet de concevoir des designs originaux, du fait de la suppression du cadre de porte classique, tout en conservant un guidage et un maintien efficaces du panneau mobile. Une version améliorée de cette approche est proposée dans le document de brevet FR 3 021 254, au nom du déposant de la présente demande de brevet, et qui décrit un réglage simple et efficace des patins, permettant d'obtenir un guidage précis et prédéterminé, assuré par les rails et les patins, malgré les tolérances relativement importantes pouvant exister, d'un véhicule à l'autre.

Toutefois, d'autres problèmes de montage, d'assemblage et de guidage peuvent apparaître, notamment du fait de la position de la vitre par rapport à l'enjoliveur placé sur le rail. La position de celui-ci et/ou du panneau vitré doit tenir compte des tolérances et des jeux, mais ceux-ci ne sont pas toujours compatibles avec un jeu supplémentaire selon la direction longitudinale du véhicule (direction X) pour le déplacement du panneau vitré.

Il existe donc un besoin de contrôler la position en X du panneau vitré, et de garantir que son guidage s'effectue sans jeu (ou à tout le moins avec un jeu très faible).

### 3. Objectifs de l'invention

L'invention a notamment pour objectif de répondre à ce besoin.

Plus précisément, un objectif de l'invention est de fournir un dispositif vitré pour la réalisation d'une porte de véhicule, qui permette un guidage simple et efficace du panneau vitré, sans jeu ou à jeu très réduit dans la direction X.

Un autre objectif de l'invention est de fournir un tel dispositif vitré qui soit simple à mettre en œuvre et à assembler, par exemple, sur une chaîne de montage.

### 4. Exposé de l'invention

Cet objectif, ainsi que d'autres qui apparaîtront par la suite, sont atteints à l'aide d'un dispositif vitré destiné à être assemblé à un caisson de carrosserie pour former une porte de véhicule automobile, comprenant au moins un panneau vitré mobile portant, sur sa face orientée vers l'intérieur du véhicule, au moins un patin de guidage monté chacun coulissant par rapport à un rail de guidage.

Selon l'invention, ledit rail de guidage présente une portion de guidage de section essentiellement circulaire, présentant un rayon R1, ouverte pour permettre le passage d'une portion de liaison d'au moins un desdits patins, et au moins un desdits patins présente au moins une portion de blocage dans la direction longitudinale dudit véhicule (X), essentiellement ovoïdale et dont le rayon maximal R2 est sensiblement supérieur au rayon R1, ladite portion de blocage étant déformable de façon à pénétrer dans ladite portion de guidage du rail.

Ainsi, cette portion de blocage bloque tout déplacement en X. Bien sûr, le blocage n'existe que dans la direction X, et elle autorise un guidage dans la direction Z (hauteur du véhicule) et le cas échéant dans la direction latérale Y, si la vitre est galbée. Il s'agit donc d'une « portion de blocage en X et de guidage en Z et en Y », appelée ici « portion de blocage » par simplification.

On notera ici que le dispositif vitré de l'invention met en œuvre deux rails, par exemple l'un à l'avant et l'autre arrière, pour un dispositif destiné à être monté sur une portière ou une paroi latérale d'un véhicule. Un seul de ces rails est équipé d'un tel patin selon l'invention, par exemple à l'arrière pour une porte avant, à l'avant pour une porte arrière (le système serait hyperstatique si l'on bloquait les patins avant et arrière en X).

Selon les modes de réalisation, les deux patins ou un seul d'entre eux présentent une telle portion de blocage ovoïdale.

Selon un mode de réalisation particulier, ladite portion de blocage est essentiellement sphérique. Elle peut également être de forme essentiellement sphéroïdale.

Selon une approche particulière, ladite portion de blocage est évidée dans sa partie centrale, de façon à permettre sa déformation.

Notamment, ladite portion de blocage peut présenter deux ailes symétriques, séparées par une rainure s'étendant selon ladite direction longitudinale dudit véhicule (X).

Ainsi, lorsque les ailes sont logées dans la portion de guidage du rail, elles sont contraintes par celles-ci, et se rapprochent l'une de l'autre, tout en s'arc-boutant sur les parois internes de la portion de guidage. Les ailes assurent alors un blocage efficace en X, sans s'opposer au coulissement du patin.

Lesdites ailes peuvent présenter une nervure s'étendant à l'intérieur de ladite rainure.

Ceci permet de renforcer les ailes, et de tendre à les ramener dans leur position de repos (position en l'absence de contrainte).

Ladite partie de liaison peut présenter, sur au moins une de ses faces, au moins un bossage de guidage dans ladite portion de guidage du rail, s'étendant selon la direction latérale (Y) dudit véhicule.

Ce bossage permet d'assurer un guidage suffisant dans le rail, bien que de moindre qualité que celui assuré par la portion de blocage en X, en cas de détérioration, d'usure ou de bris de cette dernière

Selon un mode de réalisation particulier, ledit patin est surmoulé sur un insert métallique.

Ledit surmoulage peut notamment être réalisé en polyoxyméthylène (POM).

L'invention concerne également un tel patin de guidage en tant que tel, pour un dispositif vitré destiné à être assemblé à un caisson de carrosserie pour former une porte de véhicule automobile, ledit dispositif vitré comprenant au moins un panneau vitré mobile portant, sur sa face orientée vers l'intérieur du véhicule, au moins deux patins de guidage montés chacun coulissant par rapport à un rail de guidage.

Ledit rail de guidage présentant une portion de guidage de section essentiellement circulaire, présentant un rayon R1, ouverte pour permettre le passage d'une portion de liaison d'au moins un desdits patins, ledit patin présente une portion de blocage dans la direction longitudinale dudit véhicule (X), essentiellement ovoïdale et dont le rayon maximal R2 est sensiblement supérieur au rayon R1, ladite portion de blocage étant déformable de façon à pénétrer dans ladite portion de guidage du rail.

L'invention concerne encore les portes de véhicule automobile, comprenant un dispositif vitré tel que décrit ci-dessus, ainsi que les véhicules automobiles comprenant au moins un te dispositif vitré.

### 5. Exposé des figures

D'autres caractéristiques et avantages de l'invention apparaîtront plus clairement à la lecture de la description suivante des modes de réalisation de l'invention, donnée à titre de simples exemples illustratifs et non limitatifs et des dessins annexés parmi lesquels :
- les figures 1A et 1B présentent un exemple de porte selon l'invention, la partie mobile étant respectivement en position fermée et en position ouverte ;
- la figure 2 illustre le dispositif vitré de la porte des figures 1A et 1B ;
- la figure 3 présente un autre exemple de dispositif vitré, vu du côté extérieur du véhicule, et présentant deux patins selon l'invention ;
- la figure 4 est une vue en coupe d'une portion supérieure de la figure 3, illustrant notamment un patin ;
- la figure 5 est une vue en coupe du rail de la figure 4 ;
- la figure 6 présente une vue partielle du patin de la figure 4, et en particulier la portion de guidage ;
- les figures 7A et 7B illustrent le patin de la figure 6 assemblé à un rail, respectivement :
   ∘ figure 7A : la portion de guidage n'étant pas insérée dans le rail ;
   ∘ figure 7B : la portion de guidage étant insérée dans le rail.

### 6. Description détaillée de modes de réalisation

L'invention concerne donc une porte de véhicule automobile, et, en particulier, sa partie vitrée, qui est affleurante, c'est-à-dire qu'aucun cadre ou élément de cadre ne fait saillie vers l'extérieur du véhicule, par rapport au plan de cette partie vitrée.

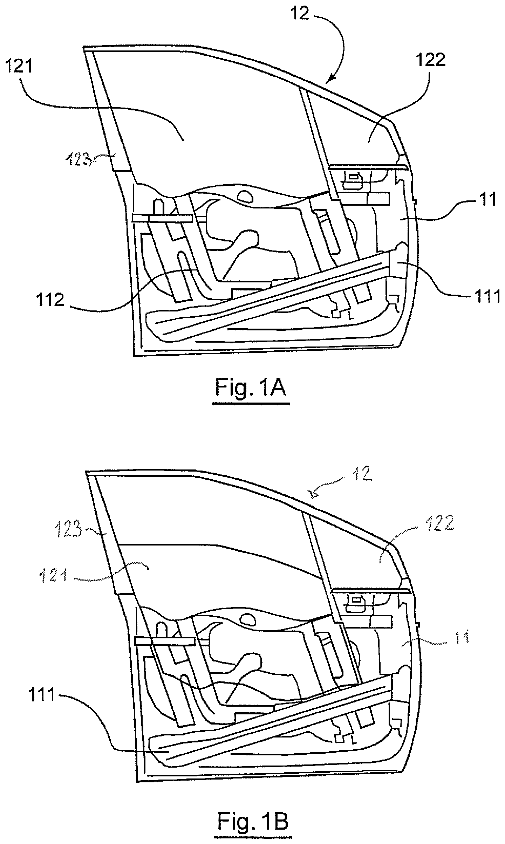

Comme le montre les figures 1A et 1B, le mode de réalisation décrit ci-après concerne une porte latérale avant. Cependant, bien sûr, la même approche peut être mise en œuvre sur d'autres portes d'un véhicule.

Cette porte comprend classiquement une partie inférieure 11, appelée caisson de porte, formant la structure de cette porte. Sur les figures, l'élément extérieur de la carrosserie est omis, pour laisser apparaître l'intérieur de ce caisson, qui comprend notamment un montant 111 de renfort, et des éléments 112 de réception et de maintien de la partie supérieure vitrée.

Celle-ci comprend une partie mobile 121, pouvant être déplacée d'une position fermée (figure 1A) vers une position ouverte (figure 1B). Dans le mode de réalisation illustré, elle comprend également un élément vitré fixe 122, correspondant ici à la partie orientée vers l'avant du véhicule. De l'autre côté, vers l'arrière, un enjoliveur 123 peut être prévu.

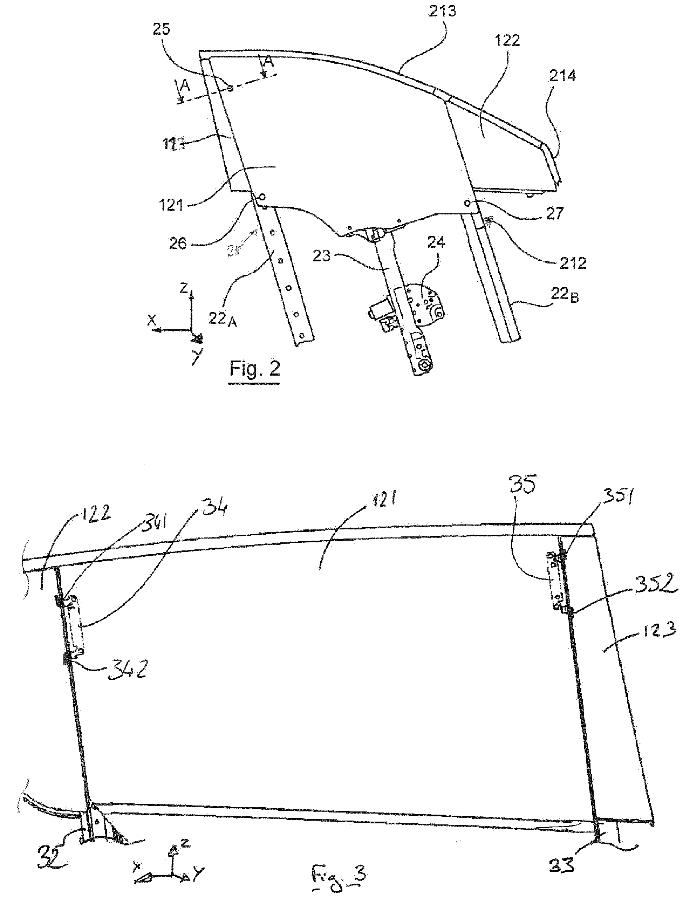

Cette partie vitrée, ou dispositif vitré, 12 peut être réalisée de façon indépendante, comme illustré par la figure 2, et assemblée ensuite au caisson 11, pour former la porte.

Elle comprend un cadre 21, formé ici de deux montants 211 et 212, associés chacun à un rail 22_{A}, 22_{B}, d'un élément 213 suivant la courbe de la partie supérieure de la partie vitrée, et d'un élément avant 214 associé à la partie vitrée fixe 122. Le cadre peut porter un joint d'étanchéité. Le montant 211 peut porter l'enjoliveur 123.

Le panneau mobile 121 est entraîné en déplacement par des moyens d'entraînement 23, par exemple un mécanisme à crémaillère, actionné lui-même à un moteur électrique 24. D'autres moyens d'entraînement, y compris des moyens d'entraînement manuels, peuvent bien sûr être mis en œuvre.

Sur la figure 2, la partie vitrée est vue depuis l'extérieur. On constate que le cadre 21 (notamment les montants 211 et 212) s'étend sous le panneau mobile 121, c'est-à-dire vers l'intérieur du véhicule. Des patins de guidage sont fixés sur la face du panneau mobile 121 orienté vers l'intérieur du véhicule, pour coopérer avec les rails 22_{A}, 22_{B}. Bien que, en pratique, ils ne soient généralement pas visibles de l'extérieur (la zone correspondante étant sérigraphiée), on a fait apparaître sur la figure 2 leurs positions. Dans ce mode de réalisation, deux patins 25 et 26 sont prévus pour coopérer avec le rail 22_{A} orienté vers l'arrière, et un patin unique 27 est prévu pour coopérer avec le rail orienté vers l'avant 22_{B}.

La figure 3 présente un exemple de panneau vitré selon l'invention, vu de l'extérieur. Les patins sont représentés en pointillés, car vus par transparence. La partie mobile 121, ici dans la position fermée, est entourée, à gauche, d'une partie vitrée fixe 122, qui pourrait également être un enjoliveur, et à droite d'un enjoliveur 123.

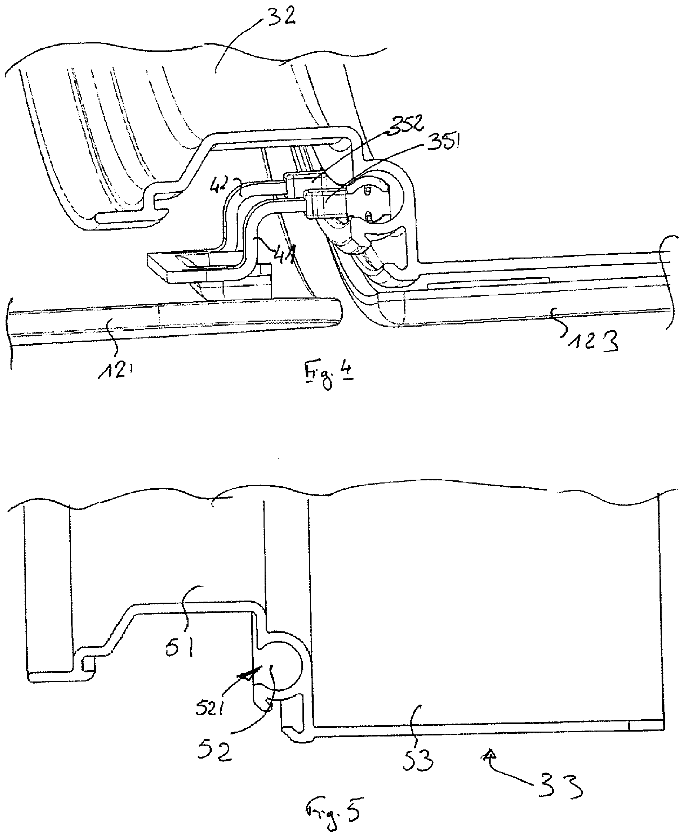

Comme ceci apparaît plus clairement sur la vue en coupe partielle de la figure 4, l'enjoliveur 123 doit affleurer avec le panneau vitré mobile 121, et l'écartement en X entre les deux pièces doit être maîtrisée. Pour ceci, il est donc important que le panneau mobile 121 ne se déplace pas intempestivement selon cette direction X, tout en permettant bien sûr un déplacement efficace en Z (hauteur du véhicule), pour ouvrir et fermer la vitre, ainsi que le cas échéant un déplacement en Y, pour suivre le galbe du véhicule tel qu'il apparaît, dans l'exemple illustré, sur la figure 4 (qui correspond à la partie supérieure du véhicule, la vitre étant fermée).

Dans le mode de réalisation illustré par les figures 3 et 4, chaque rail de guidage 32, 33 est associé à un patin 34, 35, fixé au panneau vitré mobile 121 (par exemple selon la technique du document de brevet FR3021254) et présentant chacun deux éléments de guidage 341, 342 et 351, 352 respectivement.

Ces éléments de guidage (ainsi qu'une portion de liaison associée) sont formées, notamment surmoulées, sur des pattes métalliques 41, 42, mieux visibles sur la figure 4. Le surmoulage est par exemple réalisé en POM (polyoxyméthylène).

La figure 5 illustre, en coupe, un exemple de rail selon l'invention. Il comprend notamment :
- une zone 51 de solidarisation au châssis du véhicule définissant un espace par lequel le patin peut se déplacer ;
- une zone de guidage 52, apte à coopérer avec la ou les portions de guidage d'un patin. La section de cette portion de guidage 52 est essentiellement circulaire, avec une ouverture 521 permettant le passage d'une portion de liaison du patin ;
- une surface 53, sur laquelle l'enjoliveur 123 peut être rapporté.

Comme illustré sur la figure 4, le rail 33, et donc tous les éléments 51, 52 et 53 qui le constitue, peuvent être galbés.

Comme mentionné précédemment, dans le mode de réalisation illustré, chaque patin présente deux éléments de guidage 351, 352, symétriques, et montées chacune sur l'une des pattes métalliques 41, 42 formant insert de renfort.

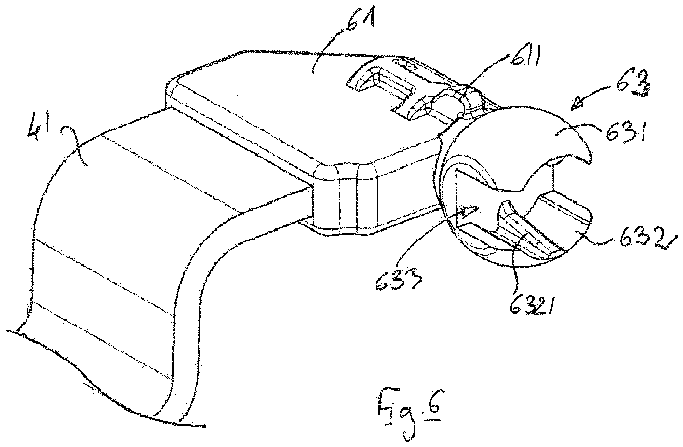

Un exemple d'élément de guidage 351 d'un patin est illustré sur la figure 6.

L'élément de guidage comprend une portion de liaison 61 surmoulée sur l'extrémité de la patte métallique 41. L'épaisseur de cette portion de liaison 61 est telle qu'elle peut traverser l'ouverture 521 de la portion de guidage 52 du rail.

Cette portion de liaison 61 porte une portion de guidage (en Y et en Z) et de blocage en X 63 de forme essentiellement sphérique, dans ce mode de réalisation. Plus généralement, cette forme peut être une forme essentiellement sphéroïdale (forme d'olive), et plus généralement encore une forme essentiellement ovoïdale. On indique « essentiellement », pour définir la forme, d'une part car une variation minime est acceptable, dès lors que la fonction n'est pas modifiée, et d'autre part car cette forme est tronquée, en particulier au niveau de l'ouverture de la rainure (espace séparant les deux ailes), comme expliqué ci-après, et le cas échéant au niveau de la solidarisation avec la portion de liaison.

Cette sphère, ou forme sphéroïdale ou ovoïdale, selon les cas, n'est en effet pas matériellement complète, et est conçue de façon à être déformable. Elle est évidée dans sa partie centrale, et présente deux ailes 631, 632, parallèles et séparées par une rainure centrale 633, selon le mode de réalisation illustré. Cette rainure s'étend selon un axe parallèle à la direction X du véhicule.

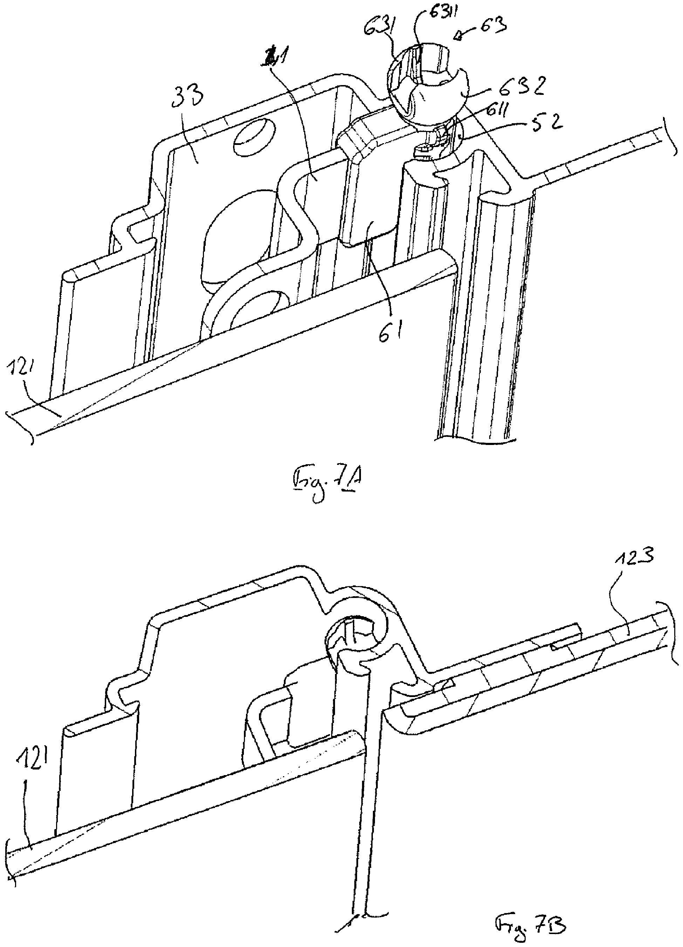

Le rayon R2 de cette sphère (ou le rayon maximum s'il s'agit d'une forme ovoïde) est légèrement supérieur au rayon R1 de la portion de guidage 52 du rail. Ceci apparaît notamment sur la figure 7A, qui présente le patin partiellement introduit dans le rail. On constate que les ailes 631 et 632 de la sphère occupent un espace plus important que celui définit par le rail.

Ainsi, comme illustré sur la figure 7B, lorsque ces ailes 631 et 632 sont introduites, à force, dans le rail, se rapprochent l'une de l'autre, ce qui est rendu possible par la rainure 633 et la souplesse des ailes 631 et 632.

De cette façon, la portion 63 est comprimée selon la direction Y, et bloquée selon la direction X. On obtient de manière simple et efficace un blocage en X du patin, sans perturbation du guidage des patins en Y et en Z.

Dans le mode de réalisation illustré, et comme on le voit sur la figure 6, chaque aile de sphère 631, 632 est associée à une nervure 6311, 6321, qui assure la rigidité suffisante, et qui tend à ramener les ailes 631 et 632 contre les bords du rail.

La partie de liaison 61 peut par ailleurs porter, sur chacune de ces faces, un bossage 611 qui assure un guidage de remplacement, en cas d'usure, de détérioration ou de bris des ailes 631, 632.

Le blocage en X du patin selon l'invention ne s'applique que sur un seul rail, par exemple à l'arrière pour une porte avant, à l'avant pour une porte arrière. Le système serait en effet hyperstatique si l'on bloquait les patins avant et arrière en X.

Il est possible d'utiliser un ou deux patins pour le blocage en X. Ainsi, selon une variante de mise en œuvre du mode de réalisation décrit, un seul patin pour le blocage en X, par exemple le patin 25 de la figure 2, peut être mis en œuvre. Dans ce cas, le patin 26 peut être remplacé par une butée de blocage X fixée sur le rail 22_{A}.

Le rail 22_{B} opposé au blocage en X a une section différente du rail 22_{A} : le patin 27, qui peut être identique au patin 25, coulisse, dans ce mode de réalisation, dans une forme principalement en U, ce qui lui autorise un déplacement en X permettant de compenser des tolérances de fabrication et de fonctionnement.

## Revendications

1. Dispositif vitré destiné à être assemblé à un caisson (11) de carrosserie pour former une porte de véhicule automobile, comprenant au moins un panneau vitré mobile (121) portant, sur sa face orientée vers l'intérieur du véhicule, au moins un patin de guidage (25) montés chacun coulissant par rapport à un rail de guidage (22_{A}), **caractérisé en ce que** ledit rail de guidage (22_{A}) présente une portion de guidage de section essentiellement circulaire, présentant un rayon R1, ouverte pour permettre le passage d'une portion de liaison (61) d'au moins un desdits patins de guidage (25), et **en ce qu'**au moins un desdits patins de guidage (25) présente au moins une portion de blocage (63) dans la direction longitudinale dudit véhicule (X), essentiellement ovoïdale et dont le rayon maximal R2 est sensiblement supérieur au rayon R1, ladite portion de blocage (63) étant déformable de façon à pénétrer dans ladite portion de guidage du rail.

2. Dispositif selon la revendication 1, **caractérisé en ce que** ladite portion de blocage (63) est essentiellement sphérique.

3. Dispositif selon la revendication 1, **caractérisé en ce que** ladite portion de blocage (63) est évidée dans sa partie centrale, de façon à permettre sa déformation.

4. Dispositif selon la revendication 3, **caractérisé en ce que** ladite portion de blocage (63) présente deux ailes (631, 632) symétriques, séparées par une rainure (633) s'étendant selon ladite direction longitudinale dudit véhicule (X).

5. Dispositif selon la revendication 4, **caractérisé en ce que** lesdites ailes (631, 632) présentent une nervure (6311, 6321) s'étendant à l'intérieur de ladite rainure (633).

6. Dispositif selon la revendication 1, **caractérisé en ce que** ladite partie de liaison (61) présente, sur au moins une de ses faces, au moins un bossage (611) de guidage dans ladite portion de guidage du rail, s'étendant selon la direction latérale (Y) dudit véhicule.

7. Dispositif selon la revendication 1, **caractérisé en ce que** ledit patin (25) est surmoulé sur un insert métallique.

8. Patin de guidage d'un dispositif vitré destiné à être assemblé à un caisson (11) de carrosserie pour former une porte de véhicule automobile, ledit dispositif vitré comprenant au moins un panneau vitré mobile (121) portant, sur sa face orientée vers l'intérieur du véhicule, au moins un patin de guidage (25) monté chacun coulissant par rapport à un rail de guidage (22),
**caractérisé en ce que**, ledit rail de guidage (22_{A}) présentant une portion de guidage de section essentiellement circulaire, présentant un rayon R1, ouverte pour permettre le passage d'une portion de liaison (61) d'au moins un desdits patins de guidage (25), ledit patin de guidage (25) présente une portion de blocage (63) dans la direction longitudinale dudit véhicule (X), essentiellement ovoïdale et dont le rayon maximal R2 est sensiblement supérieur au rayon R1, ladite portion de blocage (63) étant déformable de façon à pénétrer dans ladite portion de guidage du rail.

9. Porte de véhicule automobile, **caractérisée en ce qu'**elle comprend un dispositif vitré selon l'une quelconque des revendications 1 à 7.

10. Véhicule automobile, **caractérisé en ce qu'**il comprend au moins un dispositif vitré selon l'une quelconque des revendications 1 à 7.

## Patentansprüche

1. Verglaste Vorrichtung, die dazu bestimmt ist, an einem Karosseriekasten (11) montiert zu werden, um eine Kraftfahrzeugtür zu bilden, umfassend mindestens eine bewegliche Glasplatte (121), die auf ihrer zum Inneren des Fahrzeugs gewandten Seite mindestens einen Führungsschuh (25) trägt, der gleitend relativ zu einer Führungsschiene (22_{A}) montiert ist,
**dadurch gekennzeichnet, dass** die Führungsschiene (22_{A}) einen Führungsabschnitt mit im Wesentlichen kreisförmigem Querschnitt aufweist, der einen Radius R1 aufweist, der offen ist, um den Durchgang eines Verbindungsabschnitts (61) mindestens eines der Führungsschuhe (25) zu ermöglichen, und dass mindestens einer der Führungsschuhe (25) mindestens einen Blockierungsabschnitt (63) in Längsrichtung des Fahrzeugs (X) von im Wesentlichen ovaler Form aufweist, dessen maximaler Radius R2 deutlich größer als der Radius R1 ist, wobei der Blockierungsabschnitt (63) verformbar ist, um in den Führungsabschnitt der Schiene einzudringen.

2. Vorrichtung nach Anspruch 1, **dadurch gekennzeichnet, dass** der Blockierungsabschnitt (63) im Wesentlichen sphärisch ist.

3. Vorrichtung nach Anspruch 1, **dadurch gekennzeichnet, dass** der Blockierungsabschnitt (63) in seinem Mittelteil ausgehöhlt ist, um seine Verformung zu ermöglichen.

4. Vorrichtung nach Anspruch 3, **dadurch gekennzeichnet, dass** der Blockierungsabschnitt (63) zwei symmetrische Flügel (631, 632) aufweist, die durch eine Nut (633) getrennt sind, die sich in Längsrichtung des Fahrzeugs (X) erstreckt.

5. Vorrichtung nach Anspruch 4, **dadurch gekennzeichnet, dass** die Flügel (631, 632) eine Rippe (6311, 6321) aufweisen, die sich innerhalb der Nut (633) erstreckt.

6. Vorrichtung nach Anspruch 1, **dadurch gekennzeichnet, dass** der Verbindungsabschnitt (61) auf mindestens einer seiner Seiten mindestens einen sich entlang der seitlichen Richtung (Y) des Fahrzeugs erstreckenden Führungsvorsprung (611) in dem Führungsabschnitt der Schiene aufweist.

7. Vorrichtung nach Anspruch 1, **dadurch gekennzeichnet, dass** der Schuh (25) um einen metallischen Einsatz herum geformt ist.

8. Führungsschuh einer verglasten Vorrichtung, die dazu bestimmt ist, an einem Karosseriekasten (11) montiert zu werden, um eine Kraftfahrzeugtür zu bilden, wobei die Vorrichtung mindestens eine bewegliche Glasplatte (121) aufweist, die auf ihrer zum Inneren des Fahrzeugs gewandten Seite mindestens einen Führungsschuh (25) trägt, der gleitend relativ zu einer Führungsschiene (22) montiert ist,
**dadurch gekennzeichnet, dass** die Führungsschiene (22_{A}) einen Führungsabschnitt mit im Wesentlichen kreisförmigem Querschnitt aufweist, der einen Radius R1 aufweist, der offen ist, um den Durchgang eines Verbindungsabschnitts (61) mindestens eines der Führungsschuhe (25) zu ermöglichen, dass der Führungsschuh (25) einen Blockierungsabschnitt (63) in Längsrichtung des Fahrzeugs (X) von im Wesentlichen ovaler Form aufweist, dessen maximaler Radius R2 deutlich größer als der Radius R1 ist, wobei der Blockierungsabschnitt (63) verformbar ist, um in den Führungsabschnitt der Schiene einzudringen.

9. Kraftfahrzeugtür, **dadurch gekennzeichnet, dass** sie eine verglaste Vorrichtung nach einem der Ansprüche 1 bis 7 umfasst.

10. Kraftfahrzeug, **dadurch gekennzeichnet, dass** es mindestens eine verglaste Vorrichtung nach einem der Ansprüche 1 bis 7 umfasst.

## Claims

1. Glazed device intended to be assembled to a bodywork casing (11) in order to form a motor vehicle door, comprising at least one movable glazed panel (121) that bears, on its face oriented towards the inside of the vehicle, at least one guide shoe (25) each of which is mounted so as to slide with respect to a guide rail (22A),
**characterised in that** said guide rail (22A) has a guide portion of substantially circular cross section, having a radius R1, that is open to allow the passage of a connecting portion (61) of at least one of said guide shoes (25),
and **in that** at least one of said guide shoes has at least one portion (63) for locking in the longitudinal direction of said vehicle (X), substantially ovoid and having a maximum radius R2 that is substantially greater than the radius R1, said locking portion (63) being deformable so as to pass into said guide portion of the rail.

2. Device according to claim 1, **characterised in that** said portion (63) for locking is substantially spherical.

3. Device according to claim 1, **characterised in that** said portion (63) for locking is hollowed out in the central portion thereof, in such a way as to allow for the deformation thereof.

4. Device according to claim 3, **characterised in that** said portion (63) for locking has two symmetrical wings (631, 632), separated by a groove (633) extending along said longitudinal direction of said vehicle (X).

5. Device according to claim 4, **characterised in that** said wings (631, 632) have a rib (6311, 6321) extending inside said groove (633).

6. Device according to claim 1, **characterised in that** said connecting portion (61) has, on at least one of its faces, at least one guide boss (611) in said guide portion of the rail, extending along the lateral direction (Y) of said vehicle.

7. Device according to claim 1, **characterised in that** said shoe (25) is overmoulded on a metal insert.

8. Guide shoe of a glazed device intended to be assembled to a bodywork casing (11) in order to form a motor vehicle door, said glazed device comprising at least one movable glazed panel (121) that bears, on its face oriented towards the inside of the vehicle, at least one guide shoe (25) each mounted so as to slide with respect to a guide rail (22),
**characterised in that**, said guide rail (22A) having a guide portion of substantially circular cross section, having a radius R1, that is open to allow the passage of a connecting portion (61) of at least one of said guide shoes (25), said guide shoe (25) has a portion (63) for locking in the longitudinal direction of said vehicle (X), substantially ovoid and having a maximum radius R2 that is substantially greater than the radius R1, said locking portion (63) being deformable so as to pass into said guide portion of the rail.

9. Motor vehicle door, **characterised in that** it comprises a glazed device according to any of claims 1 to 7.

10. Motor vehicle, **characterised in that** it comprises at least one glazed device according to any of claims 1 to 7.
